# EUROPÄISCHE PATENTSCHRIFT

(11) **EP 1 685 042 B1**
(45) Veröffentlichungstag und Bekanntmachung des Hinweises auf die Patenterteilung: **27.02.2008**
(21) Anmeldenummer: 04789976.0
(22) Anmeldetag: 13.10.2004
(51) Int. Cl.: B65G 15/34

(54) **FÖRDERGURT MIT LAUFSEITIGER KUGELVERSTÄRKUNG**
CONVEYOR BELT WITH BALL-TYPE REINFORCEMENT ON THE BACKING SIDE
BANDE TRANSPORTEUSE RENFORCEE PAR BILLES DU COTE DEPLACEMENT

(30) Priorität: 19.11.2003 DE 10354133
(43) Veröffentlichungstag der Anmeldung: 02.08.2006
(73) Patentinhaber: Phoenix Conveyor Belt Systems GmbH, 07422 Bad Blankenburg (DE)
(72) Erfinder: KROPF-EILERS, Adolfo, 21220 Seevetal (DE); LABUS, Eduard, 21435 Stelle (DE)
(74) Vertreter: Finger, Karsten
(86) Internationale Anmeldenummer: PCT/DE2004/002272
(87) Internationale Veröffentlichungsnummer: WO 2005/051808

(56) Entgegenhaltungen:
- DE-A1- 3 309 228
- US-A- 3 607 606
- PATENT ABSTRACTS OF JAPAN Bd. 009, Nr. 114 (M-380), 18. Mai 1985 (1985-05-18) & JP 60 000931 A (MITSUBOSHI BELT KK), 7. Januar 1985 (1985-01-07)

## Beschreibung

Die Erfindung betrifft einen Fördergurt mit einer Tragseite und Laufseite aus elastomerem Werkstoff sowie mit einem eingebetteten Festigkeitsträger, insbesondere in Form von Stahlseilen bzw. Stahlcorden oder eines ein- oder mehrlagigen Festigkeitsträgers.

Diesbezüglich wird beispielsweise auf folgenden Stand der Technik verwiesen: JP 60 000931 A, DE 25 32 190 C2, DE 38 01 120 C2, DE 37 35 024 A1 und DE 38 02 963 A1.

Im Rahmen einer Weiterentwicklung besteht die Aufgabe darin, einen Fördergurt mit einem geringeren Eindrückrollwiderstand, der somit zu einem geringeren Energiebedarf führt, bereitzustellen.

Gelöst wird diese Aufgabe gemäß Kennzeichen des Anspruches 1 dadurch, dass die Laufseite mit Kugeln verstärkt ist.

Zweckmäßige Ausgestaltungen der Erfindung sind in den Ansprüchen 2 bis 20 genannt.

Die Erfindung wird nun anhand eines Ausführungsbeispieles unter Bezugnahme auf eine Zeichnung, die den Querschnitt eines Fördergurtes zeigt, näher beschrieben.

Der Fördergurt 1 umfasst eine Tragseite 2 und Laufseite 3, die jeweils aus einem elastomeren Werkstoff bestehen. Der Fördergurt weist zudem einen eingebetteten Festigkeitsträger 4 in Form von Stahlseilen auf.

Die Laufseite 3 ist mit Kugeln 5 verstärkt, die innerhalb einer einzigen Schicht 6 angeordnet sind. Diese Schicht in Form einer Elastomermatrix verläuft in der Nähe des Festigkeitsträgers 4, wobei sich die Kugelverstärkung im Wesentlichen über die gesamte Fördergurtbreite erstreckt. Ferner weisen die Kugeln im Wesentlichen den gleichen Durchmesser auf, wobei der Durchmesser der Kugeln etwa gleich der Schichtstärke entspricht.

Die Besonderheit dieser durch Kugeln 5 verstärkten Laufseite 3 liegt in der runden Oberfläche der eingebrachten Kugeln, die zu einem geringeren Eindrückrollwiderstand führt. Die Laufeigenschaften des Fördergurtes werden verbessert, was zu einem geringeren Energiebedarf beiträgt.

Die mit Kugeln verstärkte Laufseite wird auch als Dämpfungskugelmatte bezeichnet.

Die folgenden Tabellen halten in Abhängigkeit des Kugelwerkstoffes einerseits in der Tabelle 1 den zweckmäßigen Durchmesser- und Dichtebereich der Kugeln und der Elastomerdichten sowie andererseits in der Tabelle 2 konkrete Versuchsdaten innerhalb dieser Bereiche fest.

**Tabelle 1**

| Kugeln | | | Elastomerdichte [g/cm³] |
|---|---|---|---|
| Werkstoff | Durchmesser [mm] | Dichte [g/cm³] | (Verstärkungsschicht) |
| Stahl | 1-5 | 7,5-8,7 | 1,1 - 1,6 |
| PUR | 1-5 | 1,18-1,24 | 1,1 -1,6 |
| Aluminium | 1-5 | 2,7 | 1,1-1,6 |
| Glas | 1 - 5 | 2,6 | 1,1 - 1,6 |
| Blei | 1 - 5 | 11,4 | 1,1 - 1,6 |
| POM | 1 - 5 | 1,41 - 1,43 | 1,1 - 1,6 |

**Tabelle 2**

| Kugeln | | | Elastomerdichte [g/cm³] |
|---|---|---|---|
| Werkstoff | Durchmesser [mm] | Dichte [g/cm³] | (Verstärkungsschicht) |
| Stahl | 1 | 8,0 | 1,1 |
| Stahl | 5 | 8,0 | 1,1 |
| PUR | 1 | 1,2 | 1,1 |
| PUR | 5 | 1,2 | 1,1 |
| Blei | 5 | 11,4 | 1,1 |
| Blei | 5 | 11,4 | 1,6 |

Die Stärke der Verstärkungsschicht entsprach bei allen Versuchen dem Durchmesser der Kugeln.

### Bezugszeichenliste

- 1: Fördergurt
- 2: Tragseite (tragseitige Deckplatte)
- 3: Laufseite (laufseitige Deckplatte)
- 4: Festigkeitsträger (Stahlseile)
- 5: Kugeln
- 6: Schicht der Kugeln (Verstärkungsschicht)

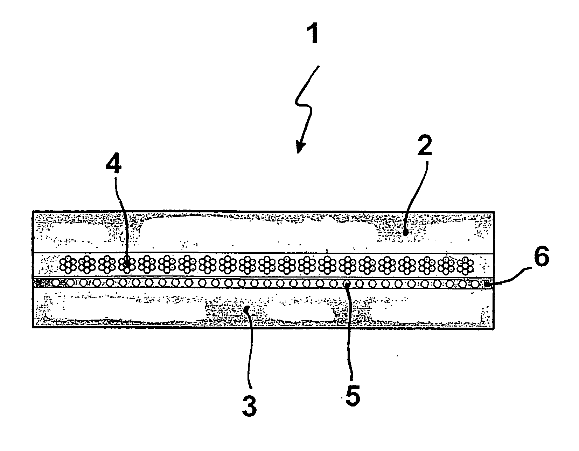

## Patentansprüche

1. Fördergurt (1) mit einer Tragseite (2) und Laufseite (3) aus elastomerem Werkstoff sowie mit einem eingebetteten Festigkeitsträger (4), **dadurch gekennzeichnet, dass** die Laufseite (3) mit Kugeln (5) verstärkt ist.

2. Fördergurt nach Anspruch 1, **dadurch gekennzeichnet, dass** die Kugeln (5) innerhalb wenigstens einer Schicht (6) angeordnet sind.

3. Fördergurt nach Anspruch 2, **dadurch gekennzeichnet, dass** die Kugeln (5) innerhalb einer einzigen Schicht (6) angeordnet sind.

4. Fördergurt nach Anspruch 2 oder 3, **dadurch gekennzeichnet, dass** die Schicht/en (6) in der Nähe des Festigkeitsträgers (4) angeordnet ist/sind.

5. Fördergurt nach Anspruch 2 oder 3, **dadurch gekennzeichnet, dass** die Schicht/en etwa in der Mitte der Laufseite (3), und zwar bezogen auf die Dicke der Laufseite, angeordnet ist/sind.

6. Fördergurt nach Anspruch 2 oder 3, **dadurch gekennzeichnet, dass** die Schicht/en in der Nähe der Oberfläche der Laufseite (3), und zwar bei vollständiger Einbettung, angeordnet ist/sind.

7. Fördergurt nach einem der Ansprüche 1 bis 6, **dadurch gekennzeichnet, dass** sich die Kugelverstärkung im Wesentlichen über die gesamte Fördergurtbreite erstreckt.

8. Fördergurt nach einem der Ansprüche 1 bis 6, **dadurch gekennzeichnet, dass** sich die Kugelverstärkung in Bezug auf die Fördergurtbreite partiell erstreckt, beispielsweise im mittigen oder in den beiden Randbereichen des Fördergurtes.

9. Fördergurt nach einem der Ansprüche 1 bis 8, **dadurch gekennzeichnet, dass** sich die Kugelverstärkung im Wesentlichen über die gesamte Fördergurtlänge erstreckt.

10. Fördergurt nach einem der Ansprüche 1 bis 8, **dadurch gekennzeichnet, dass** sich die Kugelverstärkung in Bezug auf die Fördergurtlänge partiell erstreckt.

11. Fördergurt nach einem der Ansprüche 1 bis 10, **dadurch gekennzeichnet, dass** die Kugeln (5) aus Kunststoff bestehen.

12. Fördergurt nach Anspruch 11, **dadurch gekennzeichnet, dass** die Kugeln aus Polyurethan (PUR) oder Polyoxymethylen (POM) bestehen.

13. Fördergurt nach einem der Ansprüche 1 bis 10, **dadurch gekennzeichnet, dass** die Kugeln (5) aus Glas bestehen.

14. Fördergurt nach einem der Ansprüche 1 bis 10, **dadurch gekennzeichnet, dass** die Kugeln (5) aus einem metallischen Werkstoff bestehen.

15. Fördergurt nach Anspruch 14, **dadurch gekennzeichnet, dass** die Kugeln (5) aus Stahl, der insbesondere durchgehärtet ist, oder aus Aluminium oder Blei bestehen.

16. Fördergurt nach einem der Ansprüche 1 bis 15, **dadurch gekennzeichnet, dass** die Kugeln (5) im Wesentlichen den gleichen Durchmesser aufweise.

17. Fördergurt nach einem der Ansprüche 1 bis 16, insbesondere in Verbindung mit Anspruch 16, **dadurch gekennzeichnet, dass** der Durchmesser der Kugeln (5) 1 bis 5 mm beträgt.

18. Fördergurt nach Anspruch 17, **dadurch gekennzeichnet, dass** der Durchmesser der Kugeln (5) 3 bis 4 mm beträgt.

19. Fördergurt nach einem der Ansprüche 1 bis 18, insbesondere in Verbindung mit Anspruch 2 oder 3, **dadurch gekennzeichnet, dass** die Elastomerdichte der Kugelverstärkung 1,0 bis 2,0 g/cm³ beträgt.

20. Fördergurt nach Anspruch 19, **dadurch gekennzeichnet, dass** die Elastomerdichte der Kugelverstärkung 1,1 bis 1,6 g/cm³ beträgt.

## Claims

1. Conveyor belt (1) with a bearing side (2) and a backing side (3) of elastomeric material and also with an embedded reinforcing element (4), **characterized in that** the backing side (3) is reinforced with balls (5).

2. Conveyor belt according to Claim 1, **characterized in that** the balls (5) are arranged within at least one layer (6).

3. Conveyor belt according to Claim 2, **characterized in that** the balls (5) are arranged within a single layer (6).

4. Conveyor belt according to Claim 2 or 3, **characterized in that** the layer(s) (6) is/are arranged in the vicinity of the reinforcing element (4).

5. Conveyor belt according to Claim 2 or 3, **characterized in that** the layer(s) is/are arranged approximately in the middle of the backing side (3), that is with respect to the thickness of the backing side.

6. Conveyor belt according to Claim 2 or 3, **characterized in that** the layer(s) is/are arranged in the vicinity of the surface of the backing side (3), that is with complete embedding.

7. Conveyor belt according to one of Claims 1 to 6, **characterized in that** the ball-type reinforcement extends substantially over the entire width of the conveyor belt.

8. Conveyor belt according to one of Claims 1 to 6, **characterized in that** the ball-type reinforcement extends partially with respect to the width of the conveyor belt, for example in the central region or in the two edge regions of the conveyor belt.

9. Conveyor belt according to one of Claims 1 to 8, **characterized in that** the ball-type reinforcement extends substantially over the entire length of the conveyor belt.

10. Conveyor belt according to one of Claims 1 to 8, **characterized in that** the ball-type reinforcement extends partially with respect to the length of the conveyor belt.

11. Conveyor belt according to one of Claims 1 to 10, **characterized in that** the balls (5) consist of plastic.

12. Conveyor belt according to Claim 11, **characterized in that** the balls consist of polyurethane (PUR) or polyoxymethylene (POM).

13. Conveyor belt according to one of Claims 1 to 10, **characterized in that** the balls (5) consist of glass.

14. Conveyor belt according to one of Claims 1 to 10, **characterized in that** the balls (5) consist of a metallic material.

15. Conveyor belt according to Claim 14, **characterized in that** the balls (5) consist of steel, which is in particular fully hardened, or of aluminium or lead.

16. Conveyor belt according to one of Claims 1 to 15, **characterized in that** the balls (5) have substantially the same diameter.

17. Conveyor belt according to one of Claims 1 to 16, in particular in conjunction with Claim 16, **characterized in that** the diameter of the balls (5) is 1 to 5 mm.

18. Conveyor belt according to Claim 17, **characterized in that** the diameter of the balls (5) is 3 to 4 mm.

19. Conveyor belt according to one of Claims 1 to 18, in particular in conjunction with Claim 2 or 3, **characterized in that** the elastomer density of the ball-type reinforcement is 1.0 to 2.0 g/cm³.

20. Conveyor belt according to Claim 19, **characterized in that** the elastomer density of the ball-type reinforcement is 1.1 to 1.6 g/cm³.

## Revendications

1. Courroie transporteuse (1) qui présente un côté porteur (2) et un côté d'avancement (3) en matériau élastomère ainsi qu'un renfort (4) qui y est incorporé, **caractérisée en ce que** le côté d'avancement (3) est renforcé par des billes (5).

2. Courroie transporteuse selon la revendication 1, **caractérisée en ce que** les billes (5) sont disposées dans au moins une couche (6).

3. Courroie transporteuse selon la revendication 2, **caractérisée en ce que** les billes (5) sont disposées dans une seule couche (6).

4. Courroie transporteuse selon les revendications 2 ou 3, **caractérisée en ce que** la ou les couches (6) sont disposées à proximité du renfort (4).

5. Courroie transporteuse selon les revendications 2 ou 3, **caractérisée en ce que** la ou les couches sont disposées sensiblement au milieu du côté d'avancement (3) dans le sens de l'épaisseur du côté d'avancement.

6. Courroie transporteuse selon les revendications 2 ou 3, **caractérisée en ce que** la ou les couches sont disposées à proximité de la surface du côté d'avancement (3) en étant complètement incorporées.

7. Courroie transporteuse selon l'une des revendications 1 à 6, **caractérisée en ce que** le renfort de billes s'étend essentiellement sur toute la largeur de la courroie transporteuse.

8. Courroie transporteuse selon l'une des revendications 1 à 6, **caractérisée en ce que** le renfort de billes s'étend essentiellement sur une partie de la largeur de la courroie transporteuse, par exemple dans la partie centrale ou dans les deux bordures de la courroie transporteuse.

9. Courroie transporteuse selon l'une des revendications 1 à 8, **caractérisée en ce que** le renfort de billes s'étend essentiellement sur toute la longueur de la courroie transporteuse.

10. Courroie transporteuse selon l'une des revendications 1 à 8, **caractérisée en ce que** le renfort de billes s'étend sur une partie de la longueur de la courroie transporteuse.

11. Courroie transporteuse selon l'une des revendications 1 à 10, **caractérisée en ce que** les billes (5) sont réalisées en matière synthétique.

12. Courroie transporteuse selon la revendication 11, **caractérisée en ce que** les billes sont constituées de polyuréthane (PUR) ou de polyoxyméthylène (POM).

13. Courroie transporteuse selon l'une des revendications 1 à 10, **caractérisée en ce que** les billes (5) sont constituées de verre.

14. Courroie transporteuse selon l'une des revendications 1 à 10, **caractérisée en ce que** les billes (5) sont constituées d'un matériau métallique.

15. Courroie transporteuse selon la revendication 14, **caractérisée en ce que** les billes (5) sont réalisées en acier en particulier durci, en aluminium ou en plomb.

16. Courroie transporteuse selon l'une des revendications 1 à 15, **caractérisée en ce que** les billes (5) présentent essentiellement le même diamètre.

17. Courroie transporteuse selon l'une des revendications 1 à 16, en particulier en association à la revendication 16, **caractérisée en ce que** le diamètre des billes (5) est compris entre 1 et 5 mm.

18. Courroie transporteuse selon la revendication 17, **caractérisée en ce que** le diamètre des billes (5) est compris entre 3 et 4 mm.

19. Courroie transporteuse selon l'une des revendications 1 à 18, en particulier en association aux revendications 2 ou 3, **caractérisée en ce que** la masse spécifique de l'élastomère du renfort de billes est comprise entre 1,0 et 2,0 g/cm³.

20. Courroie transporteuse selon la revendication 19, **caractérisée en ce que** la masse spécifique de l'élastomère du renfort de billes est comprise entre 1,1 et 1,6 g/cm³.
